# EUROPÄISCHE PATENTSCHRIFT

(11) **EP 1 038 162 B1**
(45) Veröffentlichungstag und Bekanntmachung des Hinweises auf die Patenterteilung: **11.09.2002**
(21) Anmeldenummer: 98965763.0
(22) Anmeldetag: 04.12.1998
(51) Int. Cl.: G01M 17/00

(54) **VORRICHTUNG ZUM TESTEN VON FAHRZEUGINSASSEN-RÜCKHALTESYSTEMEN FÜR EINEN SEITENAUFPRALL**
DEVICE FOR CARRYING OUT SIDE IMPACT TESTS ON MOTOR VEHICLE PASSENGER RESTRAINT SYSTEMS
DISPOSITIF POUR L'ESSAI DE SYSTEMES DE RETENUE D'OCCUPANTS DE VEHICULE AGISSANT EN CAS DE CHOC LATERAL

(30) Priorität: 11.12.1997 DE 29721927 U
(43) Veröffentlichungstag der Anmeldung: 27.09.2000
(73) Patentinhaber: TRW Occupant Restraint Systems GmbH & Co. KG, 73553 Alfdorf (DE)
(72) Erfinder: BOCK, Heinz, D-73540 Heubach (DE); HERPICH, Thomas, D-73066 Uhingen (DE); HIRTH, Jürgen, D-74417 Gschwend (DE); MUNDAL, Stein, Helge, D-73557 Mutlangen (DE)
(74) Vertreter: Sties, Jochen, Dipl.-Ing.
(86) Internationale Anmeldenummer: EP9807896
(87) Internationale Veröffentlichungsnummer: WO99030125

(56) Entgegenhaltungen:
- DE-A1- 4 407 256
- US-A- 5 483 845
- US-A- 5 485 758
- US-A- 5 623 094

## Beschreibung

Die Erfindung betrifft eine Vorrichtung zum Testen von Fahrzeuginsassen-Rückhaltesystemen für einen Seitenaufprall, mit einem Zielschlitten, der mit einem Aufbau versehen ist, in welchem ein Sitz für eine Testpuppe, eine Nachbildung des unteren Bereichs einer Fahrzeugseitenstruktur und das zu testende Seitenaufprall-Rückhaltesystem angebracht sind, und mit einem Aufschlagschlitten, der mit einer der Nachbildung des unteren Bereichs der Fahrzeugseitenstruktur zugeordneten Anschubfläche versehen ist, wobei der Aufschlagschlitten und der Zielschlitten relativ zueinander derart bewegbar sind, daß ein Aufprall der Anschubfläche und der Nachbildung des unteren Bereichs der Fahrzeugseitenstruktur aufeinander mit vorbestimmter Geschwindigkeit herbeigeführt werden kann.

Eine solche Vorrichtung, die aus der US 5 485 758 bekannt ist, ist schematisch in Fig. 6 gezeigt. Auf dem Zielschlitten 10 ist der Aufbau 12 angebracht, in welchem der Sitz 14 für eine Testpuppe 16, die Nachbildung 18 des unteren Bereichs einer Fahrzeugseitenstruktur und das zu testende Seitenaufprall-Rückhaltesystem 20 angeordnet sind. Relativ zum Zielschlitten 10 bewegbar ist der Aufschlagschlitten 22 vorgesehen, der mit einer Anschubfläche 24 versehen ist.

Mittels dieser Vorrichtung können die verschiedensten Seitenaufprall-Rückhaltesysteme für nahezu alle Fahrzeuge getestet werden. Die Nachbildung 18 der Fahrzeugseitenstruktur wird so ausgeführt, daß sie dem Fahrzeugtyp, dessen Test simuliert werden soll, entspricht. Ferner wird das entsprechende Seitenaufprall-Rückhaltesystem 20 angebracht, das in diesem Fahrzeugtyp zum Einsatz kommen soll. Wenn dann ein Aufprall der Anschubfläche 24 mit einer vorbestimmten Geschwindigkeit auf die Nachbildung 18 der Fahrzeugseitenstruktur herbeigeführt wird, können die sich an der Testpuppe 16 einstellenden Belastungen auf die verschiedensten Weisen erfaßt werden, beispielsweise durch Meßaufnehmer oder durch Hochgeschwindigkeits-Filmaufnahmen. Durch Auswertung der erfaßten Daten lassen sich Rückschlüsse auf die Wirksamkeit des getesteten Seitenaufprall-Rückhaltesystems ziehen, ohne daß hierfür ein realer Versuch mit einem Fahrzeug vorgenommen werden muß.

Mit dieser bekannten Testvorrichtung lassen sich jedoch nur Seitenaufprall-Rückhaltesysteme testen, die sich, wenn sie im Fahrzeug verwendet werden, zwischen dem Oberkörper eines Fahrzeuginsassen und dem unteren Bereich der Tür erstrecken. Es ist nicht möglich, die in jüngster Zeit zunehmend eingesetzten Seitenaufprall-Rückhaltesysteme zu testen, die eine Rückhaltewirkung für den Kopf eines Fahrzeuginsassen bereitstellen.

Die Erfindung schafft eine Testvorrichtung, mit der auch Seitenaufprall-Rückhaltesysteme getestet werden können, die eine Rückhaltewirkung für den Kopf eines Fahrzeuginsassen bereitstellen. Dies wird bei einer Vorrichtung der eingangs genannten Art dadurch ermöglicht, daß der Aufbau auch mit einer Nachbildung des oberen Bereichs einer Fahrzeugseitenstruktur versehen ist und daß der Aufschlagschlitten mit einer oberhalb der unteren Anschubfläche angeordneten oberen Anschubfläche versehen ist. Auf diese Weise läßt sich durch das Zusammenwirken der Nachbildung des unteren und des oberen Bereichs der Fahrzeugseitenstruktur beispielsweise eine vollständige Tür, die zugehörige A-, B-, C- bzw. D-Säule und der zugehörige Dachrahmen simulieren, und es kann das Verhalten eines Scitenaufprall-Rückhaltesystems, das entweder ausschließlich den Kopf eines Fahrzeuginsassen oder auch dessen Oberkörper schützt, in Kombination mit der Nachbildung der gesamten Tür getestet werden.

Gemäß einer bevorzugten Ausführungsform der Erfindung ist vorgesehen, daß die obere Anschubfläche relativ zur unteren Anschubfläche einstellbar ist. Gemäß der bevorzugten Ausführungsform ist auch vorgesehen, daß die obere Anschubfläche gegen eine weitere Anschubfläche mit anderer Höhe austauschbar ist. Aufgrund dieser Variabilität des Aufschlagschlittens lassen sich die verschiedensten Gegenstände simulieren, mit denen ein Seitenaufprall erfolgen kann, beispielsweise Kraftfahrzeuge unterschiedlicher Größe, Lastkraftwagen, etc.

Gemäß der bevorzugten Ausführungsform der Erfindung ist weiterhin ein Koppelelement vorgesehen, das die Nachbildung des oberen Bereichs der Fahrzeugseitenstruktur mit der Nachbildung des unteren Bereichs der Fahrzeugseitenstruktur verbindet. Mittels des Koppelelementes kann die Art der Anbringung der Nachbildung des oberen Bereichs der Fahrzeugseitenstruktur an der Nachbildung des unteren Bereichs der Fahrzeugseitenstruktur individuell eingestellt werden, so daß das Verformungsverhalten des oberen Bereichs der Fahrzeugseitenstruktur von verschiedensten Fahrzeugen simuliert werden kann, also eine vergleichsweise nachgiebige Struktur des oberen Türholms und des Dachrahmens oder eine vergleichsweise steife Ausgestaltung.

Weitere vorteilhafte Ausgestaltungen der Erfindung ergeben sich aus den abhängigen Ansprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 in einer schematischen Seitenansicht einen Zielschlitlen und einen Aufschlagschlitten der erfindungsgemäßen Vorrichtung zum Testen von Fahrzeuginsassen-Rückhaltesystemen für einen Seitenaufprall;
- die Figuren 2 bis 5 in einer schematischen Seitenansicht den Zielschlitten und den Aufschlagschlitten von Fig. 1 in verschiedenen Stadien während einer Simulation eines Seitenaufpralls;
- Figur 6 eine schematische Seitenansicht einer Vorrichtung zum Testen von Fahrzeuginsassen-Rückhaltesystemen für einen Seitenaufprall aus dem Stand der Technik, bei der der in den Figuren 1 bis 5 dargestellte Zielschlitten und der Aufschlagschlitten gemäß der Erfindung verwendet werden können;
- Figur 7 eine der Figur 1 entsprechende Ansicht des Zielschlittens und des Aufschlagschlittens nach der Erfindung, in der die in den Figuren 2 bis 4 dargestellten Bewegungsabläufe zusammengefaßt sind; und
- Figur 8 eine Ansicht des Aufbaus vom Anschlagschlitten her gesehen.

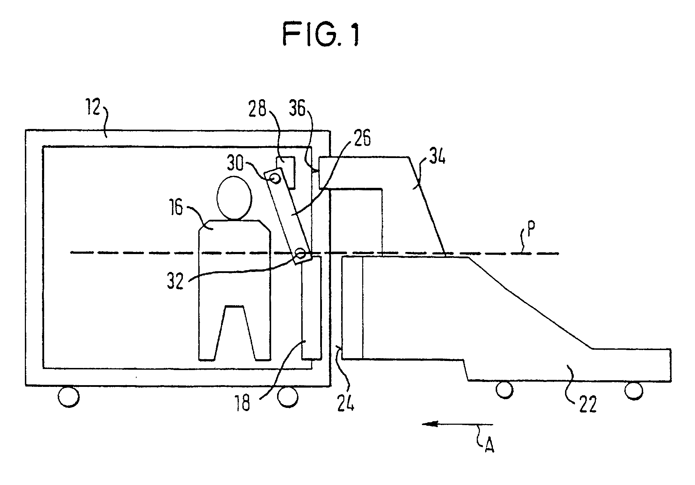

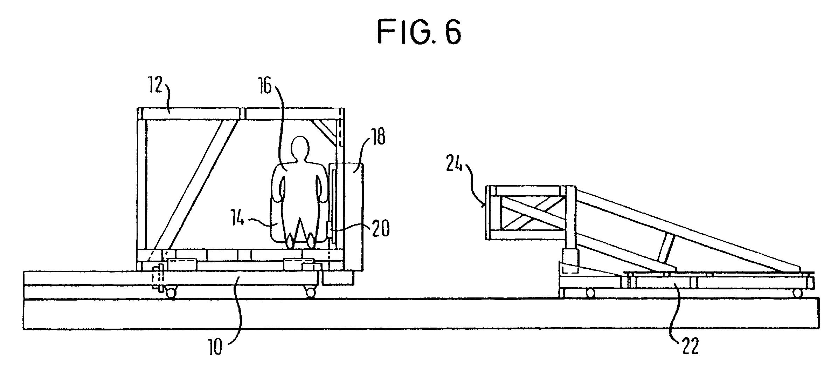

In Fig. 1 ist schematisch ein Aufbau 12 gezeigt, der anstelle des in Fig. 6 gezeigten Aufbaus 12 einer herkömmlichen. Testvorrichtung verwendet werden kann. Dies gilt auch für den in Fig. 1 gezeigten Aufschlagschlitten 22.

Der in Fig. 1 gezeigte Aufbau 12 ist mit einer Nachbildung 18 des unteren Bereichs einer Fahrzeugseitenstruktur versehen. Daran angelenkt ist ein Koppelelement 26, das eine Nachbildung 28 des oberen Bereichs einer Fahrzeugseitenstruktur mit der Nachbildung 18 des unteren Bereichs verbindet. Das Koppelelement 26 ist mit der Nachbildung des oberen bzw. des unteren Bereichs der Fahrzeugseitenstruktur durch Gelenke 30 bzw. 32 verbunden. Mindestens eines der Gelenke 30, 32 ist vorzugsweise ein Gelenk mit mehreren Freiheitsgraden. Durch geeignete Auswahl der Nachbildungen 18, 28 des unteren bzw. des oberen Bereichs der Fahrzeugseitenstruktur, des Koppelelements 26 und der Gelenke 30, 32 kann eine beliebige Seitenstruktur eines zu testenden Fahrzeugs simuliert werden. Unter Seitenstruktur wird hier insbesondere eine Fahrzeugtür mit zugehörigem Fensterrahmen, der Bodenschweller des Fahrzeugs sowie der Dachrahmen verstanden.

Das Verformungsverhalten des Fensterrahmens und des Dachrahmens kann durch geeignete Bemessung des Widerstands simuliert werden, den das Koppelelement 26 und die Gelenke 30, 32 einer Verlagerung der Nachbildung 28 des oberen Bereichs der Fahrzeugseitenstruktur entgegensetzen.

Der Aufschlagschlitten 22 ist mit einer der Nachbildung 18 des unteren Bereichs der Fahrzeugseitenstruktur zugeordneten Anschubfläche 24 versehen. Unter dem unteren Bereich der Fahrzeugseitenstruktur wird hier der Bereich unterhalb der unteren Fensterkante verstanden. Zusätzlich ist ein Aufsatz 34 auf dem Aufschlagschlitten 22 angebracht, der mit einer der Nachbildung 28 des oberen Bereichs der Fahrzeugstruktur zugeordneten Anschubfläche 36 versehen ist. Entsprechend ihrer Anordnung werden die Nachbildung 18, 28 des unteren bzw. des oberen Bereichs der Fahrzeugseitenstruktur und die diesen zugeordneten Anschubflächen 24, 36 nachfolgend als untere bzw. obere Nachbildung und als untere bzw. obere Anschubfläche bezeichnet. Die obere Anschubfläche 36 ist relativ zur unteren Anschubfläche 24 einstellbar. Die Einstellung kann sowohl parallel zur Richtung A vorgenommen werden, mit der der Aufschlagschlitten 22 in Richtung des Zielschlittens 10 bewegt werdem kann, als auch senkrecht zu dieser Richtung entlang einer Richtung vorgenommen werden, die senkrecht zur Zeichenebene ist. Somit kann ein beliebiger Gegenstand simuliert werden, der für den Test der Seitenaufprall-Rückhaltevorrichtung verwendet werden soll. Mittels dieser Einstellung kann also der Ablauf des Auftreffens der oberen und der unteren Anschubfläche 36, 24 auf die Nachbildungen 28, 18 oberhalb und unterhalb einer gedachten, zur Zeichenebene senkrechten Ebene P vorgenommen werden, die etwa auf der Höhe der unteren Fensterkante eines zu simulierenden Fahrzeugs verläuft.

Das zu testende und in Fig. 1 nicht dargestellte Seitenaufprall-Rückhaltesystem kann entsprechend der später in der Realität vorgesehenen Anordnung entweder in der Nähe der oberen Nachbildung 28 oder der unteren Nachbildung 18 oder an diesen oder dem Koppelelement angeordnet werden.

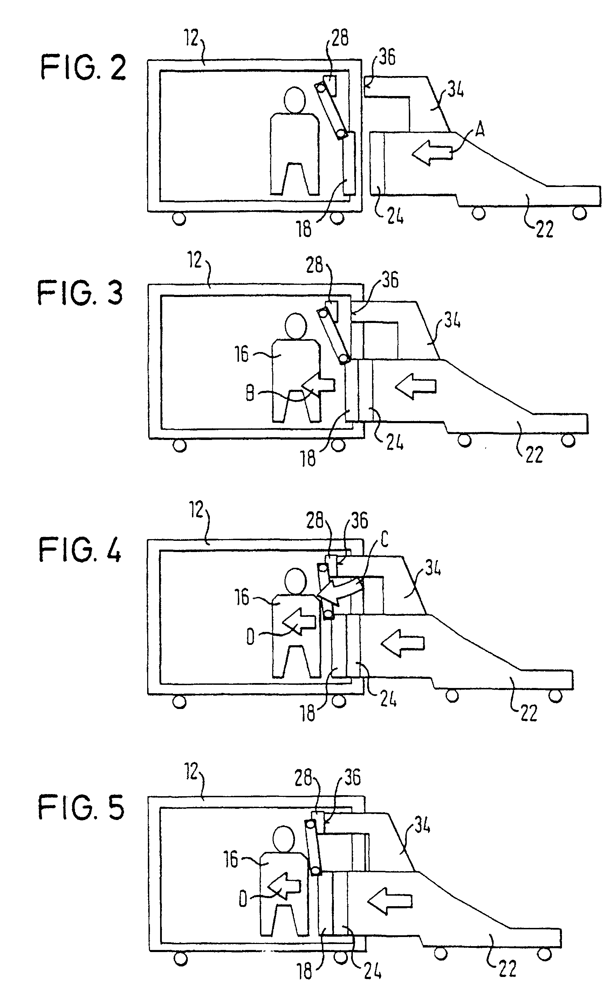

In den Figuren 2 bis 5 sind verschiedene Schritte während eines mit der erfindungsgemäßen Vorrichtung vorgenommenen Tests dargestellt. In Fig. 2 ist der Aufschlagschlitten 22, der sich mit einer vorbestimmten Geschwindigkeit in der Richtung des Pfeils A auf den Zielschlitten zu bewegt, zu einem Zeitpunkt gezeigt, in welchem sich die untere Anschubfläche 24 kurz vor der unteren Nachbildung 18 befindet.

In Fig. 3 sind der Aufbau 12 und der Aufschlagschlitten 22 zu dem Zeitpunkt dargestellt, an dem die untere Anschubfläche 24 gerade die untere Nachbildung 18 berührt. Die obere Anschubfläche 36 befindet sich noch im Abstand von der oberen Nachbildung 28. Dies entspricht beispielsweise dem Ablauf eines Seitenaufpralls bei einem Kraftfahrzeug, dessen Fensterrahmen an der oberen Seite bezüglich der Mitte der Tür nach innen geneigt ist. Ab dem Zeitpunkt, der dem in Fig. 3 gezeigten Zustand entspricht, beginnt die untere Nachbildung 18, sich unter der Wirkung der Anschubfläche 24 entlang dem Pfeil B zum Fahrzeuginsassen hin zu bewegen. Je nach der Auslegung der Aktivierungsvorrichtung wird das zu testende Seitenaufprall-Rückhaltesystem etwa ab diesem Zeitpunkt aktiviert. Das Koppelelement 26, welches die B-Säule simuliert, wird damit eine Schwenkbewegung um das Gelenk 30 in Richtung Insassen vollziehen.

In Fig. 4 sind der Aufbau 12 und der Aufschlagschlitten 22 zu dem Zeitpunkt gezeigt, in welchem die obere Anschubfläche 36 die obere Nachbildung 28 berührt. Die obere Nachbildung 28 beginnt nunmehr, sich unter der Wirkung der oberen Anschubfläche 36 zur Testpuppe hin zu bewegen (siehe Pfeil C). Durch die Verlagerung der unteren Nachbildung 18 werden ferner der im Aufbau 12 angebrachte Sitz mit der darauf befindlichen Testpuppe 16 in Richtung des Pfeils D beschleunigt.

In Fig. 5 ist der Aufschlagschlitten 22 zum Zeitpunkt des maximalen Eindringens in den Aufbau 12 hinein gezeigt. Die untere Nachbildung 18 und die obere Nachbildung 28 haben sich unter der Wirkung der unteren und der oberen Anschubfläche 24, 36 bezüglich der Figur zur linken Seite hin verlagert, und die Testpuppe 16 hat sich durch die Wirkung der unteren und der oberen Nachbildung 18, 28 ebenfalls bezüglich der Figur nach links verlagert.

Diese Abfolge der Verformung der einzelnen Strukturteile, mit der das Verhalten einer realen Fahrzeugstruktur nachgebildet ist, ermöglicht es, die Schutzwirkung eines zu testenden Seitenaufprall-Rückhaltesystems genau zu erfassen. Im Vergleich zu den bisher durchgeführten Versuchen mit kompletten Fahrzeugen oder Rohkarossericn ergeben sich erhebliche Einsparungen, ohne daß die erhaltenen Ergebnisse stark von den Ergebnissen abweichen, die bei Tests mit kompletten Fahrzeugen oder Rohkarosserien erhalten werden. Dies ist darauf zurückzuführen, daß mit der erfindungsgemäßen Vorrichtung die Seitenstruktur eines Fahrzeugs, dessen Seitenaufprall simuliert werden soll, realitätsnah nachgebildet werden kann.

Bestandteil eines zu testenden Seitenaufprall-Rückhaltesystems kann abgesehen von einem Seitenaufprall-Gassack auch ein Sicherheitsgurt sein, dessen Verhalten im Zusammenwirken mit einem Fahrzeugsitz getestet wird. Ein zu testender Seitenaufprall-Gassack kann unter einer Verkleidung an der unteren bzw. der oberen Nachbildung angeordnet sein und aus dieser nach der Aktivierung austreten.

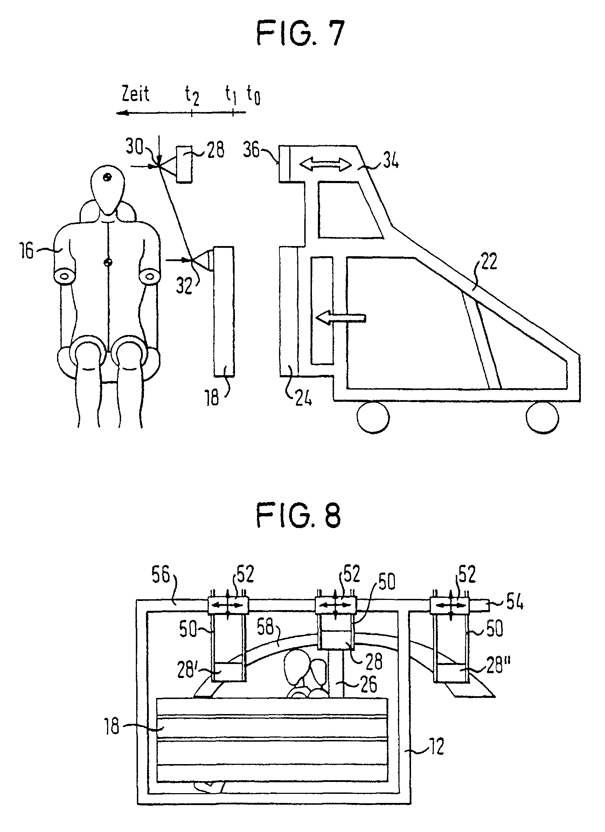

In Fig. 7 sind die zeitlichen Abläufe, die anhand der Figuren 2 bis 4 bereits beschrieben sind, nochmals zusammenfassend dargestellt. Es ist zu erkennen, daß das Gelenk 30 zwei Freiheitsgrade besitzt, nämlich in Richtung A und in vertikaler Richtung. Das Gelenk 32 hingegen besitzt nur einen Freiheitsgrad, nämlich in Richtung A. In Fig. 7 ist auch eine Zeitachse eingezeichnet, die die Position von Aufbau 12 und Aufschlagschlitten 22 zu verschiedenen Zeitpunkten wiedergibt. Zum Zeitpunkt t₀ (entsprechend Fig. 2) sind Anschubfläche 24 und untere Nachbildung 18 noch voneinander beabstandet. Zum Zeitpunkt t₁ (entsprechend Fig. 3) berühren sich Anschubfläche 24 und untere Nachbildung 18 gerade. Anschließend wird das Koppelelement 26 um die Achse 30 in Uhrzeigerrichtung geschwenkt, was die Verformung der B-Säule simuliert. Zum Zeitpunkt t₂ berührt die Anschubfläche 36 die Nachbildung 28.

Durch die Verstellmöglichkeit der oberen Anschubfläche 36 relativ zur unteren Anschubfläche 24 (angedeutet durch einen Doppelpfeil) läßt sich der Zeitbereich zwischen t₁ und t₂ so verändern, daß verschiedene Deformationsverhalten von unterer Fahrzeugseitenstruktur, B-Säule und Oberfahrzeugseitenstruktur simuliert werden können.

In Fig. 8 ist eine weitere Ausführungsform des Aufbaus 12 dargestellt. Dabei sind in Fahrzeuglängsrichtung hintereinander angeordnete Nachbildungen 28, 28' und 28" vorgesehen, von denen nur die Nachbildung 28 über das Koppelelement 26 mit der Nachbildung 18 verbunden ist. Jede Nachbildung 28, 28', 28" ist in eine eigene Aufhängung 50 eingesetzt, welche mit einem Schlitten 52 auf einem Ausleger 54 des Rahmens des Aufbaus 12 verbunden ist. Die Schlitten 52 sind auf einem oberen Querholm 56 des Wagens des Aufbaus 12 gelagert und sind in Fahrzeuglängsrichtung verstellbar. Die Aufhängungen 50 sind in vertikaler Richtung zu den Schlitten 52 verstellbar. Die Aufhängungen 50 dienen nur der Positionierung der Nachbildungen 28 bis 28" bis diese bei Kontakt mit den Anschubflächen 36 aus den Aufhängungen 50 herausbewegt werden. Ferner ist ein den Dachrahmen simulierendes Verbindungselement 58 vorgesehen, welches die Nachbildungen 28 bis 28" miteinander verbindet. Der Aufschlagschlitten 22 weist bei dieser Ausführungsform für jede Nachbildung 28, 28', 28" einen eigenen Aufsatz 34 mit zugehöriger Anschubfläche 36 auf. Wichtig ist auch, daß eine Verriegelung zwischen jeder Anschubfläche 36 und der zugeordneten Nachbildung 28, 28', 28" vorgesehen sind. Diese Verriegelung verbindet Anschubfläche und Nachbildung bei Kontakt und verhindert ein Lösen derselben während der Simulation. Erst nach erfolgter Simulation kann eine Entriegelung vorgenommen werden.

## Patentansprüche

1. Vorrichtung zum Testen von Fahrzeuginsassen-Rückhaltesystemen für einen Seitenaufprall, mit einem Zielschlitten (10), der mit einem Aufbau (12) versehen ist, in welchem ein Sitz (14) für eine Testpuppe (16), eine Nachbildung (18) des unteren Bereichs einer Fahrzeugseitenstruktur und das zu testende Seitenaufprall-Rückhaltesystem (20) angebracht sind, und mit einem Aufschlagschlitten (22), der mit einer der Nachbildung (18) des unteren Bereichs der Fahrzeugseitenstruktur zugeordneten Anschubfläche (24) versehen ist, wobei der Aufschlagschlitten (22) und der Zielschlitten (10) relativ zueinander derart bewegbar sind, daß ein Aufprall der Anschubfläche (24) und der Nachbildung (18) des unteren Bereichs der Fahrzeugseitenstruktur aufeinander mit vorbestimmter Geschwindigkeit herbeigeführt werden kann,
**dadurch gekennzeichnet, daß** der Aufbau (12) auch mit wenistens einer Nachbildung (28) des oberen Bereichs einer Fahrzeugseitenstruktur versehen ist und daß der Aufschlagschlitten (22) mit einer oberhalb der unteren Anschubfläche (24) angeordneten oberen Anschubfläche (36) versehen ist.

2. Vorrichtung nach Anspruch 1, **dadurch gekennzeichnet, daß** die obere Anschubfläche (36) relativ zur unteren Anschubfläche (24) einstellbar ist.

3. Vorrichtung nach Anspruch 2, **dadurch gekennzeichnet, daß** die obere Anschubfläche (36) relativ zur unteren Anschubfläche (24) parallel zur Bewegungsrichtung des Aufschlagschlittens (22) einstellbar ist.

4. Vorrichtung nach Anspruch 2 oder 3, **dadurch gekennzeichnet, daß** die obere Anschubfläche (36) relativ zur unteren Anschubfläche (24) senkrecht zur Bewegungsrichtung des Aufschlagschlittens (22) einstellbar ist.

5. Vorrichtung nach einem der vorhergehenden Ansprüche, **dadurch gekennzeichnet, daß** die obere Anschubfläche (36) gegen eine weitere Anschubfläche mit anderer Höhe austauschbar ist.

6. Vorrichtung nach einem der vorhergehenden Ansprüche, **dadurch gekennzeichnet, daß** ein Koppelelement (26) vorgesehen ist, das die Nachbildung (28) des oberen Bereichs der Fahrzeugseitenstruktur mit der Nachbildung (18) des unteren Bereichs der Fahrzeugseitenstruktur verbindet.

7. Vorrichtung nach Anspruch 6, **dadurch gekennzeichnet, daß** das Koppelelement (26) an der Nachbildung (28) des oberen Bereichs der Fahrzeugseitenstruktur gelenkig angebracht ist.

8. Vorrichtung nach Anspruch 6 oder 7, **dadurch gekennzeichnet, daß** das Koppelelement an der Nachbildung (18) des unteren Bereichs der Fahrzeugseitenstruktur gelenkig angebracht ist.

9. Vorrichtung nach einem der Ansprüche 6 bis 8, **dadurch gekennzeichnet, daß** zur gelenkigen Anbringung des Koppelelements (26) mindestens ein Gelenk (30; 32) mit mehreren Freiheitsgraden verwendet wird.

10. Vorrichtung nach Anspruch 9, **dadurch gekennzeichnet, daß** ein oberes Gelenk (30), welches das Koppelelement (26) mit der Nachbildung (28) des oberen Bereichs verbindet, zwei Freiheitsgrade, nämlich in Bewegungsrichtung (A) das Aufschlagschlittens (22) sowie in vertikaler Richtung, und ein unteres Gelenk (32), das das Koppelelement (26) mit der Nachbildung (18) des unteren Bereichs verbindet, einen Freiheitsgrad, nämlich in Bewegungsrichtung (A) das Aufschlagschlittens (22) hat.

11. Vorrichtung nach einem der Ansprüche 6 bis 10, **dadurch gekennzeichnet, daß** das Koppelelement (26) eines der Elemente A-, B-, C- oder D- Säule des Fahrzeugs simuliert.

12. Vorrichtung nach einem der Ansprüche 6 bis 11, **dadurch gekennzeichnet, daß** mehrere in Fahrzeuglängsrichtung hintereinander angeordnete Nachbildungen (28, 28', 28") das oberen Bereichs der Fahrzeugseitenstruktur vorgesehen sind.

13. Vorrichtung nach Anspruch 12, **dadurch gekennzeichnet, daß** für jede Nachbildung (28, 28', 28") das oberen Bereichs der Fahrzeugseitenstruktur ein eigener Aufsatz (34) auf dem Anschlagschlitten (22) vorgesehen ist.

14. Vorrichtung nach Anspruch 13, **dadurch gekennzeichnet, daß** die Nachbildungen (28, 28', 28") das oberen Bereichs der Fahrzeugseitenstruktur durch einen den Dachrahmen simulierendes Verbindungselement (58) aneinander befestigt sind.

15. Vorrichtung nach einem der vorhergehenden Ansprüche, **dadurch gekennzeichnet, daß** das zu testende Seitenaufprall-Rückhaltesystem (20) in dcr Nähe der Nachbildung (18) des unteren Bereichs der Fahrzeugseitenstruktur angeordnet ist.

16. Vorrichtung nach Anspruch 15, **dadurch gekennzeichnet, daß** das zu testende Seitenaufprall-Rückhaltesystem an der Nachbildung (18) des unteren Bereichs der Fahrzeugseitenstruktur angeordnet ist.

17. Vorrichtung nach einem der vorhergehenden Ansprüche, **dadurch gekennzeichnet, daß** das zu testende Seitenaufprall-Rückhaltesystem (20) in der Nähe der Nachbildung (28) das oberen Bereichs der Fahrzeugseitenstruktur angeordnet ist.

18. Vorrichtung nach Anspruch 17, **dadurch gekennzeichnet, daß** das zu testende Scitenaufprall-Rückhaltesystem an der Nachbildung (28) des oberen Bereichs der Fahrzeugseitenstruktur angeordnet ist.

19. Vorrichtung nach einem der Ansprüche 6 bis 15, **dadurch gekennzeichnet, daß** das zu testende Seitenaufprall-Rückhaltesystem am Koppelelement (26) angebracht ist.

20. Vorrichtung nach einem der vorhergehenden Ansprüche, **dadurch gekennzeichnet daß** der Sitz (14) für die Testpuppe (16) relativ zur Nachbildung (18, 28) der Fahrzeugseitenstruktur bewegbar ist.

21. Vorrichtung nach einem der vorhergehenden Ansprüche, **dadurch gekennzeichnet, daß** die Nachbildung (28) des oberen Bereichs der Fahrzeugseitenstruktur einen Teil des Dachrahmens des Fahrzeugs simuliert.

22. Vorrichtung nach einem der vorhergehenden Ansprüche, **dadurch gekennzeichnet, daß** die Nachbildung (28, 28', 28") des oberen Bereichs der Fahrzeugseitenstruktur über eine Aufhängung (50) an einem verstellbaren Schlitten (52) vertikal verstellbar gelagert ist, und daß der Schlitten (52) in Fahrzeuglängsrichtung am Aufbau (12) verschiebbar gelagert ist.

## Claims

1. A device for testing vehicle occupant restraint systems for a side impact, with a target carriage (10) which is provided with a structure (12) in which there are mounted a seat (14) for a test dummy (16), an imitation (18) of the lower region of a vehicle side structure and the side impact restraint system (20) to be tested, and with an impact carriage (22) which is provided with a pushing surface (24) associated with the imitation (18) of the lower region of the vehicle side structure, the impact carriage (22) and the target carriage (10) being movable relative to each other such that an impact of the pushing surface (24) and the imitation (18) of the lower region of the vehicle side structure onto each other can be brought about at a predetermined speed,
**characterized in that** the structure (12) is additionally provided with at least one imitation (28) of the upper region of a vehicle side structure and that the impact carriage (22) is provided with an upper pushing surface (36) arranged above the lower pushing surface (24).

2. The device according to Claim 1, **characterized in that** the upper pushing surface (36) is adjustable relative to the lower pushing surface (24).

3. The device according to Claim 2, **characterized in that** the upper pushing surface (36) is adjustable relative to the lower pushing surface (24) parallel to the direction of movement of the impact carriage (22).

4. The device according to Claim 2 or 3, **characterized in that** the upper pushing surface (36) is adjustable relative to the lower pushing surface (24) perpendicularly to the direction of movement of the impact carriage (22).

5. The device according to any of the preceding claims, **characterized in that** the upper pushing surface (36) is able to be exchanged for a further pushing surface with a different height.

6. The device according to any of the preceding claims, **characterized in that** a coupling element (26) is provided, which connects the imitation (28) of the upper region of the vehicle side structure with the imitation (18) of the lower region of the vehicle side structure.

7. The device according to Claim 6, **characterized in that** the coupling element (26) is mounted articulatedly on the imitation (28) of the upper region of the vehicle side structure.

8. The device according to Claim 6 or 7, **characterized in that** the coupling element is mounted articulatedly on the imitation (18) of the lower region of the vehicle side structure.

9. The device according to any of Claims 6 to 8, **characterized in that** for the articulated mounting of the coupling element (26) at least one articulation (30; 32) with several degrees of freedom is used.

10. The device according to Claim 9, **characterized in that** an upper articulation (30), which connects the coupling element (26) with the imitation (28) of the upper region, has two degrees of freedom, namely in the direction of movement (A) of the impact carriage (22) and also in the vertical direction, and a lower articulation (32), which connects the coupling element (26) with the imitation (18) of the lower region, has one degree of freedom, namely in the direction of movement (A) of the impact carriage (22).

11. The device according to any of Claims 6 to 10, **characterized in that** the coupling element (26) simulates one of the A, B, C and D columns of the vehicle.

12. The device according to any of Claims 6 to 11, **characterized in that** several imitations (28, 28', 28") of the upper region of the vehicle side structure are provided, arranged one behind the other in the longitudinal direction of the vehicle.

13. The device according to Claim 12, **characterized in that** for each imitation (28, 28', 28") of the upper region of the vehicle side structure a separate top structure (34) is provided on the impact carriage (22).

14. The device according to Claim 13, **characterized in that** the imitations (28, 28', 28") of the upper region of the vehicle side structure are secured to each other by a connecting element (58) simulating the roof frame.

15. The device according to any of the preceding claims, **characterized in that** the side impact restraint system (20) which is to be tested is arranged in the vicinity of the imitation (18) of the lower region of the vehicle side structure.

16. The device according to Claim 15, **characterized in that** the side impact restraint system which is to be tested is arranged at the imitation (18) of the lower region of the vehicle side structure.

17. The device according to any of the preceding claims, **characterized in that** the side impact restraint system (20) which is to be tested is arranged in the vicinity of the imitation (28) of the upper region of the vehicle side structure.

18. The device according to Claim 17, **characterized in that** the side impact restraint system which is to be tested is arranged at the imitation (28) of the upper region of the vehicle side structure.

19. The device according to any of Claims 6 to 15, **characterized in that** the side impact restraint system which is to be tested is arranged at the coupling element (26).

20. The device according to any of the preceding claims, **characterized in that** the seat (14) for the test dummy (16) is movable relative to the imitation (18, 28) of the vehicle side structure.

21. The device according to any of the preceding claims, **characterized in that** the imitation (28) of the upper region of the vehicle side structure simulates a part of the roof frame of the vehicle.

22. The device according to any of the preceding claims, **characterized in that** the imitation (28, 28', 28") of the upper region of the vehicle side structure is mounted via a suspension (50) on an adjustable carriage (52) and so as to be vertically adjustable, and that the carriage (52) is mounted on the structure (12) so as to be displaceable in the longitudinal direction of the vehicle.

## Revendications

1. Dispositif pour tester des systèmes de retenue de passagers de véhicules pour un impact latéral, comportant un chariot-cible (10) qui est pourvu d'une structure (12) dans laquelle sont montés un siège (14) pour un mannequin-test (16), une reproduction de la zone inférieure d'une structure latérale de véhicule et le système de retenue pour impact latéral (20) à tester, et comportant un chariot d'impact (22) qui est pourvu d'une surface de poussée (24) associée à la reproduction (18) de la zone inférieure de la structure latérale du véhicule, le chariot d'impact (22) et le chariot-cible (10) pouvant être déplacés l'un par rapport à l'autre de telle sorte qu'un impact de la surface de poussée (24) et de la reproduction (18) de la zone inférieure de la structure latérale du véhicule l'une contre l'autre peut être causée avec une vitesse prédéterminée,
**caractérisé en ce que** la structure (12) est pourvue aussi d'au moins une reproduction (28) de la zone supérieure d'une structure latérale de véhicule et **en ce que** le chariot d'impact (22) est pourvu d'une surface de poussée (36) supérieure agencée en dessus de la surface de poussée (24) inférieure.

2. Dispositif selon la revendication 1, **caractérisé en ce que** la surface de poussée supérieure (36) est réglable par rapport à la surface de poussée inférieure (24).

3. Dispositif selon la revendication 2, **caractérisé en ce que** la surface de poussée supérieure (36) est réglable par rapport à la surface de poussée inférieure (24) parallèlement à la direction de mouvement du chariot d'impact (22).

4. Dispositif selon la revendication 2 ou 3, **caractérisé en ce que** la surface de poussée supérieure (36) est réglable par rapport à la surface de poussée inférieure (24) perpendiculairement à la direction de mouvement du chariot d'impact (22).

5. Dispositif selon l'une des revendications précédentes, **caractérisé en ce que** surface de poussée supérieure (36) est échangeable contre une autre surface de poussée avec une autre hauteur.

6. Dispositif selon l'une des revendications précédentes, **caractérisé en ce qu'**il est prévu un élément de couplage (26) qui relie la reproduction (28) de la zone supérieure de la structure latérale du véhicule avec la reproduction (18) de la zone inférieure de la structure latérale du véhicule.

7. Dispositif selon la revendication 6, **caractérisé en ce que** l'élément de couplage (26) est monté de manière articulée sur la reproduction (28) de la zone supérieure de la structure latérale du véhicule.

8. Dispositif selon la revendication 6 ou 7, **caractérisé en ce que** l'élément de couplage est monté de manière articulée sur la reproduction (18) de la zone inférieure de la structure latérale du véhicule.

9. Dispositif selon l'une des revendications 6 à 8, **caractérisé en ce qu'**on utilise au moins une articulation (30 ; 32) avec plusieurs degrés de liberté pour le montage articulé de l'élément de couplage (26).

10. Dispositif selon la revendication 9, **caractérisé en ce qu'**une articulation supérieure (30), qui relie l'élément de couplage (26) à la reproduction (28) de la zone supérieure, a deux degrés de liberté, à savoir en direction de mouvement (A) du chariot d'impact (22), ainsi qu'en direction verticale, et **en ce qu'**une articulation inférieure (32), qui relie l'élément de couplage (26) à la reproduction (18) de la zone inférieure, a un degré de liberté, à savoir en direction de mouvement du chariot d'impact (22).

11. Dispositif selon l'une des revendications 6 à 10, **caractérisé en ce que** l'élément de couplage (26) simule un des éléments colonne A, colonne B, colonne C ou colonne D du véhicule.

12. Dispositif selon l'une des revendications 6 à 11, **caractérisé en ce qu'**il est prévu plusieurs reproductions (28, 28', 28") de la zone supérieure de la structure latérale du véhicule, prévues les unes derrière les autres en direction longitudinale du véhicule.

13. Dispositif selon la revendication 12, **caractérisé en ce qu'**il est prévu une tourelle (34) propre sur le chariot d'impact (22), pour chaque reproduction (28, 28', 28") de la zone supérieure de la structure latérale du véhicule.

14. Dispositif selon la revendication 13, **caractérisé en ce que** les reproductions (28, 28', 28") de la zone supérieure de la structure latérale du véhicule sont fixées les unes aux autres par un élément de liaison (58) simulant le cadre du toit.

15. Dispositif selon l'une des revendications précédentes, **caractérisé en ce que** le système de retenue pour impact latéral à tester (20) est agencé à proximité de la reproduction (18) de la zone inférieure de la structure latérale du véhicule.

16. Dispositif selon la revendication 15, **caractérisé en ce que** le système de retenue pour impact latéral à tester (20) est agencé sur la reproduction (18) de la zone inférieure de la structure latérale du véhicule.

17. Dispositif selon l'une des revendications précédentes, **caractérisé en ce que** le système de retenue pour impact latéral à tester (20) est agencé à proximité de la reproduction (28) de la zone supérieure de la structure latérale du véhicule.

18. Dispositif selon la revendication 17, **caractérisé en ce que** le système de retenue pour impact latéral à tester (20) est agencé sur la reproduction (28) de la zone supérieure de la structure latérale du véhicule.

19. Dispositif selon l'une des revendications 6 à 15, **caractérisé en ce que** le système de retenue pour impact latéral à tester est monté sur l'élément de couplage (26).

20. Dispositif selon l'une des revendications précédentes, **caractérisé en ce que** le siège (14) pour le mannequin-test (16) est mobile par rapport à la reproduction (18, 28) de la structure latérale du véhicule.

21. Dispositif selon l'une des revendications précédentes, **caractérisé en ce que** la reproduction (28) de la zone supérieure de la structure latérale du véhicule simule une partie du cadre du toit du véhicule.

22. Dispositif selon l'une des revendications précédentes, **caractérisé en ce que** la reproduction (28, 28', 28") de la zone supérieure de la structure latérale du véhicule est montée réglable à la verticale via une suspension (50) sur un chariot (52) réglable, et **en ce que** le chariot (52) est monté déplaçable sur la structure (12) en direction longitudinale du véhicule.
